# EUROPEAN PATENT APPLICATION

(11) **EP 3 252 683 A1**
(43) Date of publication of application: **06.12.2017**
(21) Application number: 17173016.1
(22) Date of filing: 26.05.2017
(51) Int. Cl.: G06Q 10/00, G05B 23/02, G07C 3/02, A61H 1/00, H04L 12/28

(54) **MASSAGE MACHINE AND DIAGNOSTIC SYSTEM OF MASSAGE MACHINE**

(30) Priority: 03.06.2016 JP 2016111870
(71) Applicant: Family Inada Co., Ltd., Osaka 532-0004 (JP)
(72) Inventor: INADA, Nichimu, Osaka, Osaka 532-0004 (JP); ISHIDOU, Yuta, Saihaku-gun, Tottori 689-3224 (JP); NOTSU, Yuji, Saihaku-gun, Tottori 689-3224 (JP); SASAKI, Izumi, Saihaku-gun, Tottori 689-3224 (JP)
(74) Representative: Horn Kleimann Waitzhofer Patentanwälte PartG mbB

(57) **Abstract**

Provided is a massage machine in which it is possible to promptly particularize a cause of abnormality or a component required to be repaired (replaced/adjusted) in a case where abnormality occurs, and a diagnostic system of the massage machine. There are provided a massage machine main body that has a treatment portion performing treatment with respect to a user, a running state detecting portion that detects a running state of each of a plurality of predetermined components configuring the massage machine main body, a storage portion that stores the running state, and a control unit that controls an operation of the massage machine main body. The control unit includes an abnormality determining portion which determines the presence and absence of abnormality related to the massage machine main body, and an abnormality outputting portion which outputs information related to the abnormality and information related to the running state in a case where the abnormality determining portion determines that abnormality is present.

## Description

### TECHNICAL FIELD

The present invention relates to a massage machine and a diagnostic system of the massage machine.

### BACKGROUND ART

A system in which a massage machine is connected to a server apparatus via a network and information is transmitted and received between the server apparatus and the massage machine has been proposed. For example, PTL 1 discloses a configuration of an aspect in which an inspection time is notified from a server apparatus to a health promotion instrument based on information from the health promotion instrument such as a massage machine. In addition, PTL 1 also discloses another aspect in which a manager of the health promotion instrument is notified of malfunction via the server apparatus in a case where the health promotion instrument detects the malfunction.

### RELATED ART DOCUMENT

### PATENT DOCUMENT

Patent Document 1: JP-A-2009-112337

### SUMMARY OF THE INVENTION

### PROBLEM THAT THE INVENTION IS TO SOLVE

However, when abnormality such as malfunction of a massage machine is only sent to a manager, it is difficult for the manager to sufficiently cope with the abnormality.

The massage machine is configured to include multiple components configuring a massage machine main body that has a treatment portion performing treatment with respect to a user, and there are many cases where it is not possible to immediately grasp which cause incurs abnormality even if the abnormality is the same (for example, the same error code) and which component is to be repaired (adjusted, replaced, or the like).

The present invention provides a massage machine in which a cause of abnormality or a component required to be repaired can be promptly particularized in a case where abnormality occurs, and a diagnostic system of a massage machine.

### MEANS FOR SOLVING THE PROBLEM

According to an aspect of the present invention, there is provided a massage machine including a massage machine main body that has a treatment portion performing treatment with respect to a user, a running state detecting portion that detects a running state of each of a plurality of predetermined components configuring the massage machine main body, a storage portion that stores the running state, and a control unit that controls an operation of the massage machine main body. The control unit includes an abnormality determining portion which determines the presence and absence of abnormality related to the massage machine main body, and an abnormality outputting portion which outputs information related to the abnormality and information related to the running state in a case where the abnormality determining portion determines that abnormality is present.

### ADVANTAGE OF THE INVENTION

According to the present invention, it is possible to promptly particularize a cause of abnormality or a component required to be repaired (replaced/adjusted) in a case where abnormality occurs.

### BRIEF DESCRIPTION OF THE DRAWINGS

- Fig. 1: is a schematic perspective view illustrating the overall configuration of a massage machine according to an embodiment of the present invention.
- Fig. 2: is a block diagram illustrating a schematic configuration of a diagnostic system including the massage machine illustrated in Fig. 1.
- Fig. 3: is a block diagram illustrating an example of a main configuration component of a mechanical treatment mechanism in the present embodiment.
- Fig. 4: is a view illustrating an example of a list of information related to a running state in the present embodiment.
- Fig. 5: is a view illustrating an example of an outputting form of an abnormality outputting portion in the present embodiment.
- Fig. 6: is a flow chart illustrating an example of cause analysis processing in the present embodiment.

### BEST MODE FOR CARRYING OUT THE INVENTION

### Overview of Aspect of Present Invention

According to an aspect of the present invention, there is provided a massage machine including a massage machine main body that has a treatment portion performing treatment with respect to a user, a running state detecting portion that detects a running state of each of a plurality of predetermined components configuring the massage machine main body, a storage portion that stores the running state, and a control unit that controls an operation of the massage machine main body. The control unit includes an abnormality determining portion which determines the presence and absence of abnormality related to the massage machine main body, and an abnormality outputting portion which outputs information related to the abnormality and information related to the running state in a case where the abnormality determining portion determines that abnormality is present.

According to the configuration, when abnormality occurs, the information related to the running state of the component configuring the massage machine main body is output together with the information related to the abnormality. Therefore, it is possible to promptly particularize a cause of abnormality or a component required to be repaired (replaced/adjusted).

The storage portion may store a plurality of abnormality states, may cause the running state of a component related to each of the abnormality states in the plurality of predetermined components to be associated with the abnormality state, and may store the associated result. The abnormality determining portion may determine the presence of the abnormality in a case where the state of the massage machine main body corresponds to any of the plurality of abnormality states. The abnormality outputting portion may cause the corresponding abnormality state to be associated with the information related to the running state of the component related to the abnormality state and may output the associated result in a case where the abnormality determining portion determines that abnormality is present. Accordingly, the abnormality state which is associated in advance and the information of the component related thereto can be acquired at once. Therefore, it is possible to more promptly particularize a cause or particularize a component required to be repaired.

Each of the running states of the plurality of predetermined components may be configured to be a running index indicated by a numerical value. The storage portion may cause a reference value set in advance regarding the running index to be associated with the running index and may store the associated result. The abnormality outputting portion may output a result as the information related to the running state such that a component having the value of the running index which has become equal to or greater than the corresponding reference value to be able to be highlighted. Accordingly, the running state of the component is indicated by the running index and the component having the running index which has become equal to or greater than the reference value set in advance is highlighted. Therefore, in a case where abnormality is determined to be present, the information of the component having the running index which has become equal to or greater than the reference value can be acquired together with the information of the abnormality. Thus, when the reference value is set as a replacement time of the component or a threshold value of the abnormality state, it is possible to easily particularize a cause or particularize a component required to be repaired.

The running index may be configured to be a running time and/or the number of times of running for each of the predetermined components. Accordingly, it is possible to be easily informed of the replacement time of the component of which the replacement time is set based on the running time and/or the number of times of running.

The massage machine may further include a communication portion that is able to transmit information output from the abnormality outputting portion, to a predetermined computer apparatus via a communication network. Accordingly, a manager or the like of the massage machine can perform remote management of the massage machine. In addition, in a case where abnormality occurs, it is possible to particularize a cause or particularize a component required to be repaired, prior to a report from the user.

The massage machine may further include a position detecting portion that detects an installation position of the massage machine main body. The communication portion may transmit the information output from the abnormality outputting portion and information of the installation position of the massage machine main body to the predetermined computer apparatus. Accordingly, the manager or the like of the massage machine can be easily informed of an installation place of the massage machine in which abnormality has occurred, and the manager or the like can promptly cope with repair or the like.

The control unit may generate information regarding using circumstances of the massage machine main body based on the running states of the plurality of predetermined components and may transmit the information regarding the using circumstances to a predetermined computer. Accordingly, a third person who is at a place separated from the user can acquire the using circumstances of the massage machine (massage machine main body) of the user through the communication network. Therefore, a purchaser or a renter can check the condition of the user through the using circumstances.

The storage portion may store the plurality of abnormality states, may cause the running state of the component related to each of the abnormality states in the plurality of predetermined components to be associated with the abnormality state, and may store the associated result. The abnormality determining portion may determine that the abnormality is present in a case where the state of the massage machine main body corresponds to any of the plurality of abnormality states. The control unit may include a cause analyzing portion which analyzes a cause in a case where the abnormality determining portion determines that abnormality is present and there are a plurality of components related to the corresponding abnormality state, based on the running state of the plurality of components. Accordingly, in a case where abnormality has occurred in the massage machine, the cause is automatically analyzed. Therefore, the abnormality can be easily repaired or the like.

The control unit may generate a course corresponding to the user based on the running states of the plurality of predetermined components. Accordingly, for example, the user can be provided with a more favorable course based on the running state of the component, and a massage effect on the user can be enhanced.

According to another aspect of the present invention, there is provided a diagnostic system of a massage machine including a massage machine and a predetermined computer apparatus which is configured to be able to communicate with the massage machine via a communication network. The massage machine includes a massage machine main body that has a treatment portion performing treatment with respect to a user, a running state detecting portion that detects running states of a plurality of predetermined components configuring the massage machine main body, a control unit that controls an operation of the massage machine main body, and a communication portion. The control unit includes an abnormality determining portion which determines the presence and absence of abnormality related to the massage machine main body, and an abnormality outputting portion which outputs information related to the abnormality in a case where the abnormality determining portion determines that abnormality is present. The communication portion is configured to transmit information related to the running state of the predetermined components to the predetermined computer apparatus via the communication network and to transmit information output from the abnormality outputting portion, to the predetermined computer apparatus via the communication network. The predetermined computer apparatus abstracts a component related to the abnormality in the plurality of predetermined components based on the information related to the abnormality and outputs the abstracted result.

According to the configuration, when abnormality occurs in the massage machine, the information related to the occurred abnormality is sent to the predetermined computer apparatus, and the information related to the running state of the component configuring the massage machine main body is sent to the predetermined computer apparatus. Therefore, it is possible for the computer apparatus to abstract the component related to the abnormality, and it is possible to promptly particularize a cause of abnormality or a component required to be repaired (replaced/adjusted).

### Embodiment

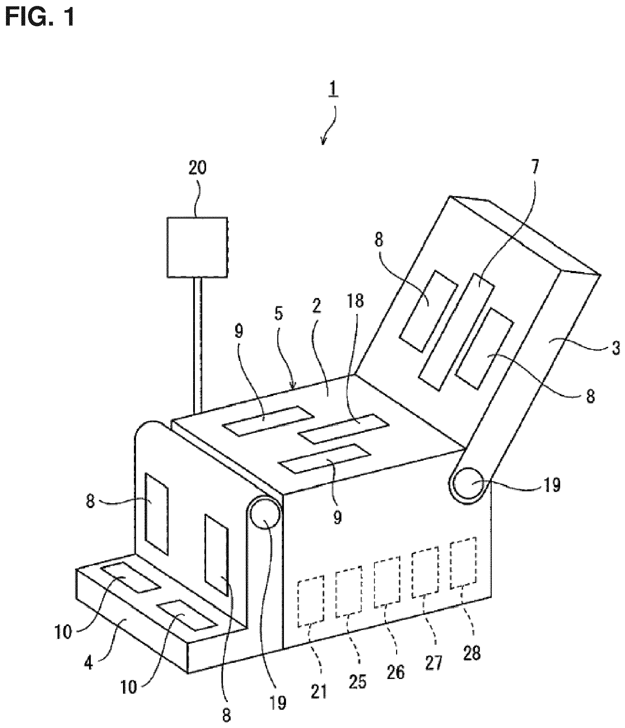

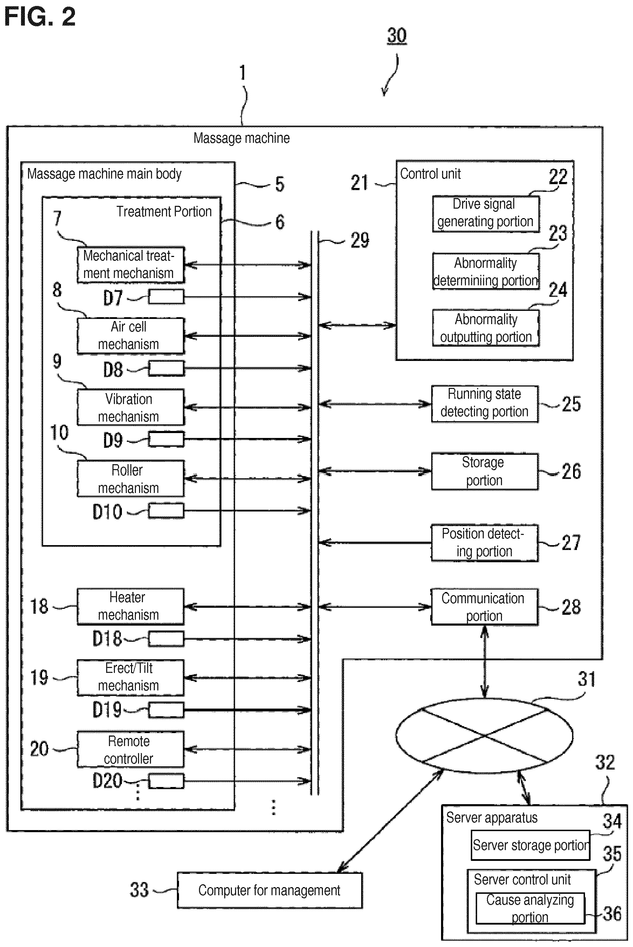

Hereinafter, a massage machine and a diagnostic system of a massage machine according to an embodiment of the present invention will be described in detail with reference to the drawings. Fig. 1 is a schematic perspective view illustrating the overall configuration of the massage machine according to the embodiment of the present invention. In addition, Fig. 2 is a block diagram illustrating a schematic configuration of the diagnostic system including the massage machine illustrated in Fig. 1. As illustrated in Fig. 1, a massage machine 1 includes a massage machine main body 5 having a seat portion 2 in which the user takes a seat, and a backrest portion 3 which is provided on a rear portion side of the seat portion 2. The massage machine main body 5 in the present embodiment is configured to be a chair-type massage machine. Moreover, the massage machine main body 5 includes a footrest 4 which supports the legs of the user. The massage machine main body 5 may include an armrest, a headrest, and the like. The concept of directions used in the description below coincides with the concept of directions view from the user who takes a seat in the seat portion 2, and other cases will be suitably described.

The massage machine main body 5 is provided with a treatment portion 6. The treatment portion 6 is configured to have a plurality of treatment members which are provided in each of the portions such as the seat portion 2, the backrest portion 3, and the footrest 4. Accordingly, the treatment portion 6 is configured to be able to massage the whole body of the user seated in the seat portion 2. The plurality of treatment members configuring the treatment portion 6 include a mechanical treatment mechanism 7, an air cell mechanism 8, a vibration mechanism 9, a roller mechanism 10, and the like.

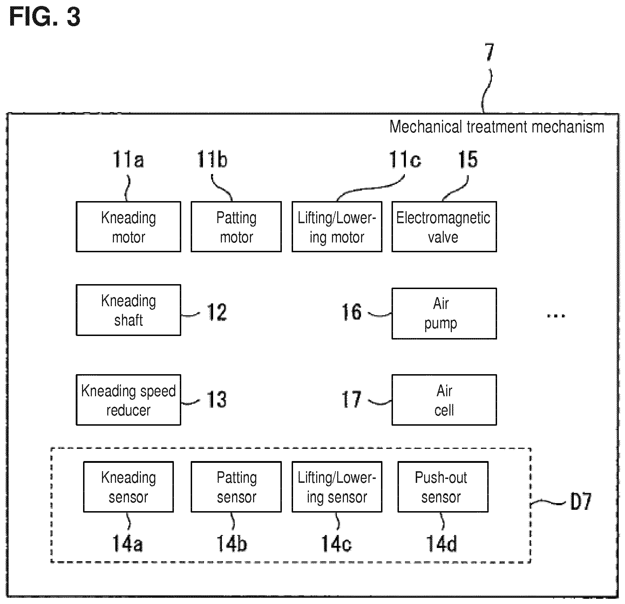

The mechanical treatment mechanism 7 is provided in a central portion of the backrest portion 3 in the rightward/leftward direction and is configured to massage the back of the user. Fig. 3 is a block diagram illustrating an example of a main configuration component of a mechanical treatment mechanism in the present embodiment. As illustrated in Fig. 3, the mechanical treatment mechanism 7 is configured to have a kneading motor 11a, a kneading shaft 12, a kneading speed reducer 13, a kneading sensor 14a, a patting motor 11b, a patting sensor 14b, a lifting/lowering motor 11c, a lifting/lowering sensor 14c, an electromagnetic valve 15, an air pump 16, an air cell 17, a push-out sensor 14d, and the like. Moreover, the mechanical treatment mechanism 7 has a treatment member (not illustrated) including a plurality of kneading balls disposed in a pair of arms on the right and left.

The kneading shaft 12 is connected to the pair of arms on the right and left. The kneading motor 11a is connected to the kneading shaft 12 via the kneading speed reducer 13 constituted with a pulley, a belt, various types of gears, and the like. In accordance with rotation of the kneading motor 11a, the kneading shaft 12 rotates. When the pair of arms on the right and left connected to the kneading shaft 12 approaches each other and is separated from each other, an operation of kneading the back of the user is realized. In addition, the patting motor 11b is connected to the arms via a link mechanism. In accordance with rotation of the patting motor 11b, the kneading balls operate in a direction intersecting the front surface of the backrest portion 3 via the arms of the treatment member, and an operation of patting the back of the user is realized.

In addition, this treatment member is provided so as to be movable along the vertical direction inside the backrest portion 3. In accordance with rotation of the lifting/lowering motor 11c, a lifting/lowering operation of the treatment member is realized along the vertical direction. In addition, the treatment member in its entirety is configured to move in a direction intersecting the front surface of the backrest portion 3 in response to expansion/contraction of the air cell 17. The air cell 17 is connected to the air pump 16 via the electromagnetic valve 15 through an air pipe. The air cell 17 expands and contracts due to air supply/exhaust of the air pump 16.

By having the configuration described above, the mechanical treatment mechanism 7 can conduct various types of massage operations such as kneading, patting, and finger-pressure therapy with respect to the back of the user. The kneading sensor 14a detects the rotational frequency of the kneading motor 11a, the patting sensor 14b detects the rotational frequency of the patting motor 11b, the lifting/lowering sensor 14c detects the vertical position of the treatment member, and the push-out sensor 14d detects the push-out quantity of the treatment member. Accordingly, an operation of the treatment member in the mechanical treatment mechanism 7 is subjected to feedback controlling.

The air cell mechanism 8 is configured to perform a massage when a plurality of air cells provided in the backrest portion 3 and the footrest 4 expand/contract and pressurize the user. Thus, each of the air cells is connected to the air pump via a corresponding electromagnetic valve through the air pipe. Each of the air cells expands and contracts in response to air supply/exhaust of the air pump and pressurizes the user. One or a plurality of air pumps may be provided with respect to the plurality of air cells provided in the massage machine main body 5. A common air pump serving as both the air pump 16 for the mechanical treatment mechanism 7 and the air pump for the air cell mechanism 8 may be used.

The vibration mechanism 9 is provided in the seat portion 2 and is configured to massage the user when a vibration portion vibrates. In addition, the roller mechanism 10 is provided in the footrest 4 and is configured to massage the user when a roller portion rotates. The detailed description of the mechanisms will be omitted. Similar to the mechanical treatment mechanism 7, each of the mechanisms is configured to have a plurality of components (for example, a motor and a speed reducer).

Disposition of each mechanism of the treatment portion 6 is not limited to the aspect described above. For example, the air cell mechanism 8 may be disposed in the seat portion 2. The air cell mechanism 8 does not have to be provided in the backrest portion 3 or the footrest 4. In addition, in the massage machine main body having the armrest or the headrest, any mechanism configuring the treatment portion 6 may be provided in the armrest or the headrest as well. In addition, the configuration is acceptable as long as at least one of the mechanical treatment mechanism 7, the air cell mechanism 8, the vibration mechanism 9, and the roller mechanism 10 is provided in the massage machine main body 5 as the treatment portion 6. Any of the mechanisms does not have to be provided in the massage machine main body 5.

In addition to the treatment portion 6, the massage machine main body 5 includes a heater mechanism 18, an erect/tilt mechanism 19, a remote controller 20, and the like. The heater mechanism 18 is configured to have a heat source portion, a thermostat, and the like. For example, the heater mechanism 18 is provided in the seat portion 2 and is configured to warm the hips of the user. The erect/tilt mechanism 19 is configured to be able to adjust the angle of the backrest portion 3 with respect to the seat portion 2. Moreover, the erect/tilt mechanism 19 is configured to be able to adjust the angle of the footrest 4 with respect to the seat portion 2. A configuration in which an erect/tilt operation of the backrest portion 3 and an activation operation of the footrest 4 are interlocked with each other may be adopted. For example, the erect/tilt mechanism 19 may be configured to be a mechanical mechanism such as a motor and a link mechanism or may have a configuration in which the angle of the backrest portion 3 and/or the footrest 4 is changed by using an air cell mechanism in response to expansion/contraction of the air cell.

The remote controller 20 is connected to the massage machine main body 5 so as to be able to communicate with each other through a cable or by radio. The remote controller 20 includes a display portion and an operation portion and is configured to allow the user to make an input to operate the massage machine main body 5.

The massage machine 1 includes a control unit 21 that controls operations of the treatment portion 6 and each of the mechanisms 18 to 20 of the massage machine main body 5, and a storage portion 26 that stores various types of data. For example, the control unit 21 and the storage portion 26 are configured to be a computer such as a microcontroller. The control unit 21 is configured to be able to transfer a signal with respect to the storage portion 26 and each of the configurations 6 and 18 to 20 of the massage machine main body 5 via a communication bus 29. The control unit 21 includes a drive signal generating portion 22 which generates a drive signal with respect to each of the configurations 6 and 18 to 20 based on an operational input and the like performed through the remote controller 20.

Each of the configurations 6 and 18 to 20 of the massage machine main body 5 is operated based on a drive signal sent from the control unit 21. The massage machine 1 includes an operation detector Di (i=7 to 10, and 18 to 20, i corresponds to the sign of each configuration) which detects the running state of each of the configurations 6 (each of the mechanisms 7 to 10) and 18 to 20 of the massage machine main body 5 and feeds the detected result back to the control unit 21. For example, the operation detector Di can include a voltage detector or a current detector which detects a voltage applied to an electric component such as the motor, or an input current; a rotational frequency detector which detects the rotational frequency of a rotary component such as the motor; a temperature detector which detects the temperature of a heater; a position sensor which detects whether or not each of the configurations 6 has arrived at a predetermined position based on the drive signal; a stress detector such as a strain sensor which detects stress of a predetermined site; and the like. Fig. 2 illustrates an example in which operation detectors Di are provided so as to respectively correspond to each of the mechanisms 7 to 10 of the treatment portion 6 and each of other configurations 18 to 20 one each. However, the corresponding relationship is not limited thereto. In the present embodiment, as illustrated in Fig. 3, the operation detector D7 of the mechanical treatment mechanism 7 includes the kneading sensor 14a, the patting sensor 14b, the lifting/lowering sensor 14c, and the push-out sensor 14d. Similarly, the operation detector Di which detects an operation of a different configuration may also be configured to have a plurality of operation detectors.

The control unit 21 includes an abnormality determining portion 23 which determines the presence and absence of abnormality (determines abnormality) related to the massage machine main body 5. The abnormality determining portion 23 determines abnormality based on a detection signal (feedback signal) from the operation detector Di. The storage portion 26 stores a normal range (or threshold value) set in advance regarding a detection value of each operation detector Di. The abnormality determining portion 23 compares the detection value of each operation detector Di with the corresponding normal range stored in the storage portion 26. In a case where the detection value is out of the normal range, the abnormality determining portion 23 determines that the corresponding configuration i is abnormal. For example, in a case where the detection value of the operation detector D7 corresponding to the mechanical treatment mechanism 7 is out of a predetermined normal range, the abnormality determining portion 23 determines that the mechanical treatment mechanism 7 is abnormal.

The control unit 21 includes an abnormality outputting portion 24 which outputs the information related to the abnormality in a case where the abnormality determining portion 23 determines that abnormality is present. The drive signal generating portion 22, the abnormality determining portion 23, and the abnormality outputting portion 24 may be configured to have one integrated circuit or the like or may be configured to have a plurality of integrated circuits or the like. For example, the control unit 21 may include a first IC chip which functions as the drive signal generating portion 22, and a second IC chip which functions as the abnormality determining portion 23 and the abnormality outputting portion 24.

In the present embodiment, the storage portion 26 stores the plurality of abnormality states and the abnormality determining portion 23 determines that abnormality is present in a case where the state of the massage machine main body 5 corresponds to any of the plurality of abnormality states. The abnormality outputting portion 24 outputs the corresponding abnormality state in the plurality of abnormality states as abnormality information in a case where abnormality is determined to be present. For example, the abnormality outputting portion 24 outputs different abnormality information depending on the operation detector Di of which the detection value is out of the normal range, in a case where the abnormality determining portion 23 determines that abnormality is present. In the present embodiment, the operation detector D7 corresponding to the mechanical treatment mechanism 7 sends a different detection signal to the control unit 21 depending on the sensors 14a to 14d, the abnormality determining portion 23 performs different determination depending on the sensors 14a to 14d, and the abnormality outputting portion 24 outputs different abnormality information depending on the sensors 14a to 14d of which the detection value is out of the normal range.

For example, a plurality pieces of the abnormality information based on the plurality of abnormality states are configured to have error numbers (error codes) different from each other. For example, the error number No. 1 indicates abnormality related to a kneading operation of the mechanical treatment mechanism 7 (abnormality based on the kneading sensor 14a of the operation detector D7), the error number No. 2 indicates abnormality related to a patting operation of the mechanical treatment mechanism 7 (abnormality based on the patting sensor 14b of the operation detector D7), the error number No. 3 indicates abnormality related to a lifting/lowering operation of the mechanical treatment mechanism 7 (abnormality based on the lifting/lowering sensor 14c of the operation detector D7), the error number No. 4 indicates abnormality related to a push-out operation of the mechanical treatment mechanism 7 (abnormality based on the push-out sensor 14d of the operation detector D7), and the error number No. 5 indicates abnormality related to an air cell operation (abnormality based on the operation detector D8). The plurality of abnormality states may be different for each operation detector Di, or at least a part of the plurality of operation detectors Di may correspond to a common abnormality state.

Incidentally, as described above, the massage machine main body 5 may be configured to have a plurality of components. The massage machine 1 includes a running state detecting portion 25 which detects the running state of each predetermined component in the components. In the present embodiment, the running state detecting portion 25 detects the running state of at least one component configuring each of the mechanisms 7 to 10 of the treatment portion 6; and the running state of at least one component configuring the heater mechanism 18, the erect/tilt mechanism 19, and the remote controller 20. The running state detecting portion 25 detects the running state of each of the kneading motor 11a, the kneading shaft 12, the kneading speed reducer 13, and the kneading sensor 14a configuring the mechanical treatment mechanism 7. The running state detecting portion 25 detects the running state of each of a first electromagnetic valve 15a, a second electromagnetic valve 15b, the air pump 16, a first air cell 17a, and a second air cell 17b configuring the air cell mechanism 8.

The running state is configured to be the running index indicated by the numerical value. For example, examples of the running index include the number of times of running (usage) the component, the running time, a voltage value or a current value (average value, maximum value, and the like) in the electric component such as the motor, and an operation sound (frequency, sound volume, sound pressure, sound pitch) of the component. The type of the running index may be different depending on the component.

The running state detecting portion 25 which detects the number of times of running the component, the running time, or the like as the running index may be configured to acquire the running index based on a drive signal (in other words, a command value) generated by the drive signal generating portion 22 of the control unit 21. In other words, the running state detecting portion 25 may be configured to be similar to the control unit 21. In other words, the running state detecting portion 25 may be configured to be the same as a microcontroller or the like configuring the drive signal generating portion 22 or may be configured to be a different microcontroller or the like. In place thereof, the running state detecting portion 25 may actually detect the number of times of running the component, the running time, or the like. In other words, the running state detecting portion 25 may be configured to be the operation detector Di. The operation detector Di detecting a voltage/current value in the electric component can also function as the running state detecting portion 25. In addition, separately from the operation detector Di, a (dedicated) configuration for detecting the running state may be provided as the running state detecting portion 25. For example, a sound concentrating microphone for detecting the operation sound of the component may be provided as the running state detecting portion 25 and a detection signal may be generated by converting a recorded operation sound into a numerical value.

The running state (running index) detected by the running state detecting portion 25 is stored in the storage portion 26. For example, in a case where the running index is the number of times of running the component or the running time, every time the corresponding component is operated, data of the running index stored in the storage portion 26 is updated by increasing the number of times of running by one time or integrating the running time for one time. In addition, for example, in a case where the running index is the maximum value of the voltage value or the current value, the control unit 21 compares the maximum value of the voltage value or the current value already stored in the storage portion 26 with the detection value of the operation detector Di, and when the detection value is high, the detection value is updated as the maximum value and is stored in the storage portion 26. In place thereof, in a case where the detection value is equal to or greater than a predetermined threshold value, the control unit 21 may cause the detection value to be stored in the storage portion 26. In this case, the voltage value or the current value to be stored in the storage portion 26 may be stored in the storage portion 26 together with information of the usage state such as a date, an operation as a trigger, and an elapsed time from when a predetermined operation starts until the detection value becomes equal to or greater than the threshold value.

The running index stored in the storage portion 26 may be one running index with respect to one component or may be a plurality of running indexes with respect to one component. For example, each of the number of times of running and the running time of the kneading motor 11a may be stored in the storage portion 26 as the running index of the kneading motor 11a.

In the present embodiment, the abnormality outputting portion 24 is configured to output the information related to the abnormality, to read out the information related to the running state detected by the running state detecting portion 25, from the storage portion 26, and to output the read out information. Accordingly, when abnormality occurs, together with the information related to the abnormality, the information related to the running state of the component configuring the massage machine main body 5 is output. Therefore, it is possible to promptly particularize a cause of abnormality or a component required to be repaired (replaced/adjusted).

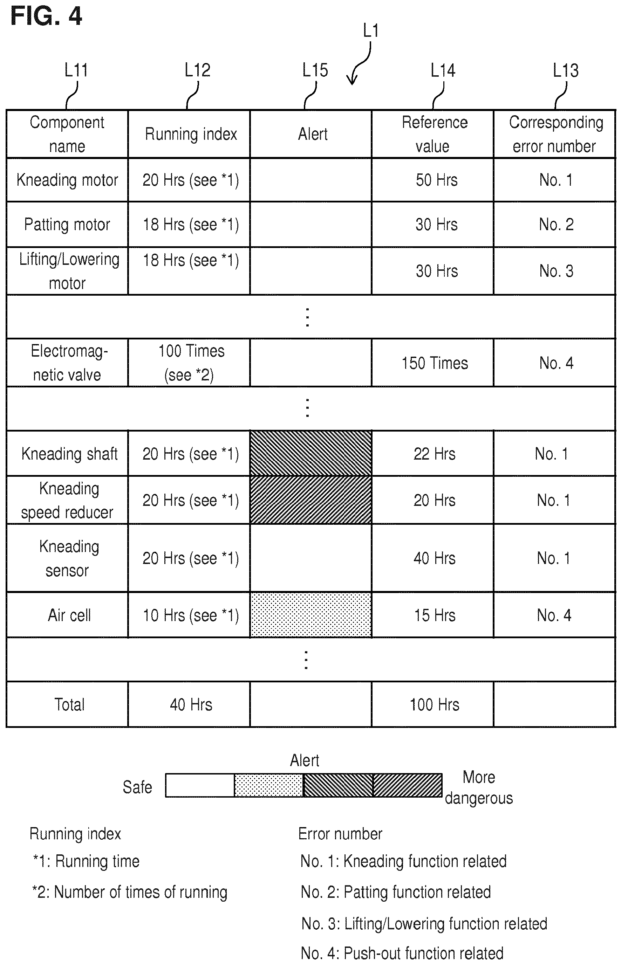

Fig. 4 is a view illustrating an example of a list of the information related to the running state in the present embodiment. Fig. 4 illustrates the information related to the running state of the mechanical treatment mechanism 7 at a certain point of time. As illustrated in Fig. 4, a list L1 is provided with a component name column L11 for showing the component names, and a running index column L12 for showing the value of the running index (integrated value, maximum value, or the like described above) matching the corresponding component as the information related to the running state. Both are shown while being associated with each other. For example, the running index with respect to the electromagnetic valve 15 is the number of times of running, and the running index with respect to other components is the running time. Accordingly, it is possible to be easily informed of the replacement time of the component in which the replacement time is set based on the running time and/or the number of times of running.

Moreover, in the present embodiment, there is provided an error number column L13 in which the error number that can be generated due to the cause of the corresponding component is associated with the component and is shown. Therefore, the storage portion 26 in the present embodiment causes the running state of the component related to each of the abnormality states in a plurality of predetermined components to be associated with the abnormality state and stores the associated result. As illustrated in Fig. 4, in a case where the abnormality determining portion 23 determines that abnormality is present, the abnormality outputting portion 24 causes the corresponding abnormality state (error number) to be associated with the information related to the running state of the component related to the abnormality state and outputs the associated result. Accordingly, the abnormality state which is associated in advance and the information of the component related thereto can be acquired at once. Therefore, it is possible to more promptly particularize a cause or particularize a component required to be repaired.

The list L1 is provided with a reference value column L14 showing the reference value with respect to the running index of each component. In other words, the storage portion 26 causes the reference value set in advance regarding the running index to be associated with the running index and stores the associated result. In addition, the abnormality outputting portion 24 outputs the corresponding reference value as the information related to the running state together with the running index.

Moreover, in the present embodiment, the abnormality outputting portion 24 outputs a result such that a component having the value of the running index which has become equal to or greater than the reference value to be able to be highlighted. In the list L1 illustrated in Fig. 4, an alert column L15 is provided for each component, and the value of the running index is color-coded in a plurality of stages in accordance with the comparison result with respect to the reference value (Fig. 4 illustrates the color-coded state realized by changing the form of shading). In Fig. 4, the component of which the value of the running index is less than the reference value is also color-coded. Therefore, it is possible to grasp the running circumstances in more detail at a glance.

When such highlighting is performed, in a case where abnormality is determined to be present, the information of the component having the running index which has become equal to or greater than the reference value or a value close to the reference value can be acquired together with the information of the abnormality. Thus, when the reference value is set as the replacement time of the component or the threshold value of the abnormality state, it is possible to easily particularize a cause or particularize a component required to be repaired.

Moreover, the list L1 may show the total sum of the running time of the mechanical treatment mechanism 7 (stated as TOTAL in the component name column L11). The reference value is also set for the total sum. The total sum of the running time does not have to be associated with the error number. In addition, in a case where a massage course in which the plurality of mechanisms configuring the treatment portion 6 or a plurality of sites are operated in order is set, the number of times of usage, the usage time, and the like of the massage course may be accumulated in the storage portion 26 and may be shown in the list L1.

In a case where the abnormality determining portion 23 determines that abnormality is present, the abnormality outputting portion 24 may output the list L1 as described above, together with the corresponding abnormality information (error number). In place thereof, a partial list in which the running state of the component related to the abnormality state is further abstracted may be output.

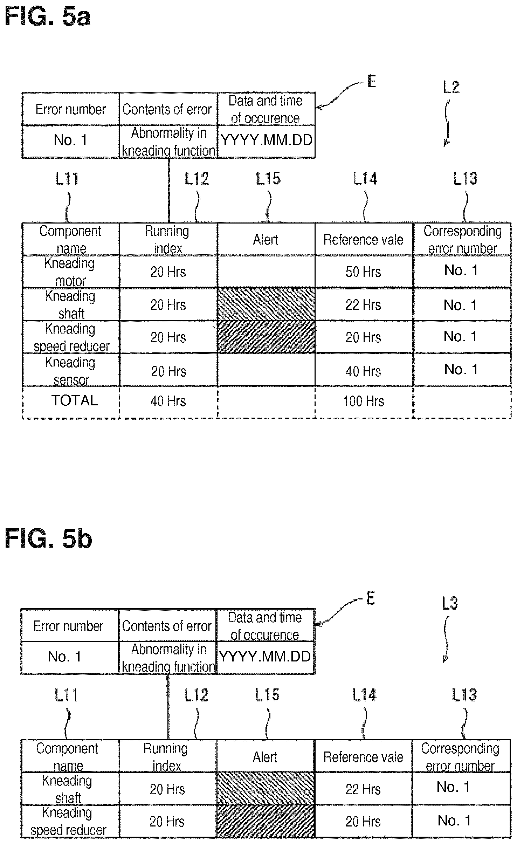

Fig. 5 is a view illustrating an example of an outputting form of the abnormality outputting portion in the present embodiment. Fig. 5(a) illustrates a form displaying running information of the component associated with the abnormality information in the list L1, together with abnormality information E. In Fig. 5(a), the abnormality information E indicates the error number No. 1 (abnormality related to kneading operation). Therefore, in the list L1, a partial list L2 having the abstracted running information of the component corresponding to the error number No. 1 is generated. Moreover, Fig. 5(a) may show a column for the total sum of the running time of the mechanical treatment mechanism 7.

Fig. 5(b) shows a form displaying a list of the running information regarding only the component of which an alert is equal to or greater than a predetermined stage in the component associated with the abnormality information together with the abnormality information E. In other words, a partial list L3 is generated such that only the running information of the component having the running index equal to or greater than a value close to the reference value (included in the second stage from the top in the alerts of four stages) in the components abstracted in Fig. 5(a) is abstracted.

In the present embodiment, in order to highlight the component, the list L1 is configured to be provided with an alert column L15. However, the configuration is not limited thereto. For example, in place of the alert column L15 of the list L1, at least any one column of the component name column L11, the running index column L12, the corresponding error number column L13, and the reference value column L14 may be color-coded. In addition to or in place of color-coding, the component name, the value of the running index, and the like to be highlighted may be subjected to flashing display. In addition, the order of the components shown in the list L1 may be rearranged in accordance with the difference between a running index Vr and a reference value Vb (Δ=Vr-Vb) or the ratio (ρ=Vr/Vb). For example, the component of which Δ is the positive value (exceeding the reference value Vb) may be disposed in a higher rank in the list L1.

In the present embodiment, the massage machine 1 includes a communication portion 28 that is able to transmit information output from the abnormality outputting portion 24, to a predetermined server apparatus 32 such as a cloud server via a communication network 31. The communication portion 28 is acceptable as long as the communication portion 28 is configured to be able to be connected to the communication network 31 such as the internet by radio or through a cable. The massage machine 1 transmits information of the massage machine 1 including the information output from the abnormality outputting portion 24 through the communication portion 28. In this case, the massage machine 1 transmits the information of the massage machine 1 together with an identification number allocated to the massage machine 1.

The server apparatus 32 includes a server storage portion 34 and a server control unit 35. The server control unit 35 causes information transmitted from the massage machine 1 to be stored in the server storage portion 34 such that the information can be identified for each massage machine 1 (for each identification number). Accordingly, in a case where a plurality of massage machines 1 are connected to the communication network 31, the server apparatus 32 can discriminate and store information transmitted from each massage machine 1 for each massage machine 1.

In the present embodiment, at least one massage machine 1 and the server apparatus 32 configure a diagnostic system 30 of the massage machine 1. Moreover, the diagnostic system 30 includes a computer 33 for management. The computer 33 for management is configured to be able to communicate with and be connected to the server apparatus 32 via the communication network 31. In place thereof, the computer 33 for management may be connected without passing through the communication network 31. For example, the computer 33 for management may be directly connected to the server apparatus 32 in serial. In addition, the computer 33 for management and the massage machine 1 may communicate with and be connected to each other via the communication network 31 without using the server apparatus 32, and information from the massage machine 1 may be directly stored in a storage portion (not illustrated) of the computer 33 for management. In other words, the "predetermined computer apparatus" in Claims may be the server apparatus 32 or may be the computer 33 for management.

In a case where abnormality information is transmitted from the massage machine 1, the server apparatus 32 transmits the identification number, the abnormality information, and the running information of the massage machine 1 in which abnormality has occurred, to the computer 33 for management. The information to be transmitted to the computer 33 for management may be the same information as the information transmitted from the massage machine 1 or may be information processed based on the information transmitted from the massage machine 1. For example, the server apparatus 32 may transmit only the identification number and the occurrence of abnormality of the massage machine 1 to the computer 33 for management. In this case, the manager can acquire more detailed information (abnormality information and running information) of each massage machine 1 by causing the computer 33 for management to have access to the server storage portion 34 of the server apparatus 32.

According to such a configuration, the manager or the like of the massage machine 1 can perform remote management of the massage machine 1 via the communication network 31. In addition, in a case where abnormality occurs, it is possible for the manager to particularize a cause or particularize a component required to be repaired, prior to a report from the user. Examples of the manager include a manufacturer and a repairer of the massage machine 1, and a rental service provider in the rental service business of the massage machine 1.

In the diagnostic system 30 of the present embodiment, the communication portion 28 of the massage machine 1 transmits the information output from the abnormality outputting portion 24 to the server apparatus 32 via the communication network 31. In other words, in a case where the abnormality determining portion 23 determines that abnormality is present, the communication portion 28 transmits the information related to the running state of the predetermined components in the massage machine main body 5 to the server apparatus 32 via the communication network 31 together with the corresponding abnormality information. In other words, the communication portion 28 transmits the abnormality information E and the list L1, L2, or L3 illustrated in Figs. 5(a) and 5(b) to the server apparatus 32.

According to such a diagnostic system 30, when abnormality occurs in the massage machine 1, information related to the occurred abnormality is sent to the server apparatus 32, and the information related to the running state of the component configuring the massage machine main body 5 is sent to the server apparatus 32. Accordingly, component related to the abnormality can be abstracted in the server apparatus 32. Therefore, it is possible to promptly particularize a cause of abnormality or a component required to be repaired (replaced/adjusted).

In the present embodiment, the massage machine 1 includes a position detecting portion 27 which detects the installation position of the massage machine main body 5. As the position detecting portion 27, a known position detector such as GPS, WiFi, and LTE can be employed. The communication portion 28 transmits information of the installation position of the massage machine main body 5 to the server apparatus 32 together with the information output from the abnormality outputting portion 24. Accordingly, the manager of the massage machine 1 can be easily informed of the installation place of the massage machine 1 in which abnormality has occurred, and the manager can promptly cope with repair or the like.

The server control unit 35 includes a cause analyzing portion 36 which analyzes the cause based on the running state of the plurality of components in a case where the abnormality determining portion 23 determines that abnormality is present and there are a plurality of components related to the corresponding abnormality state. Accordingly, in a case where abnormality occurs in the massage machine 1, the cause is automatically analyzed. Therefore, the abnormality can be easily repaired.

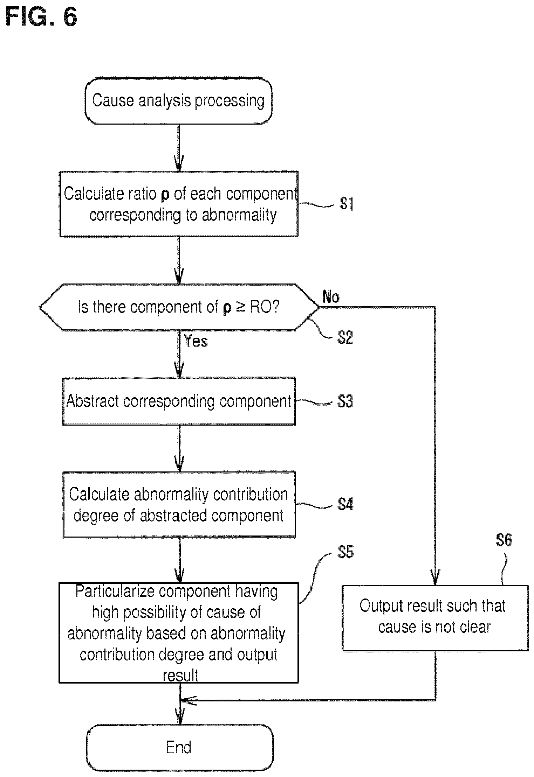

Fig. 6 is a flow chart illustrating an example of cause analysis processing in the present embodiment. As illustrated in Fig. 6, the cause analyzing portion 36 calculates the ratio p (=Vr/Vb) of the running index Vr and the reference value Vb regarding each component related to abnormality (Step S1). For example, as illustrated in Figs. 5(a) and 5(b), in a case where the abnormality information E indicates the error number No. 1 (abnormality related to kneading operation), the cause analyzing portion 36 calculates the ratio p regarding each of the kneading motor 11a, the kneading shaft 12, the kneading speed reducer 13, and the kneading sensor 14a.

The cause analyzing portion 36 determines whether or not the calculated ratio p is a value equal to or greater than a predetermined threshold value ro with respect to each component (Step S2). In a case where there is a component of which the ratio p is a value equal to or greater than the predetermined threshold value ro (Yes in Step S2), the cause analyzing portion 36 abstracts the corresponding component (Step S3).

The cause analyzing portion 36 calculates an abnormality contribution degree C of the abstracted component (Step S4). For example, the abnormality contribution degree C is applied through C=pxF by using a contribution coefficient F set in advance based on accumulated failure frequencies in the past, expected durability, and the like. The contribution coefficient F is set for each component as a greater value when the failure frequency becomes higher and the expected durability becomes lower. The cause analyzing portion 36 particularizes the component having high possibility of the cause of abnormality, based on the abnormality contribution degree C and outputs the result as an analysis result (Step S5). For example, the cause analyzing portion 36 outputs the list in which the abstracted components are arranged in order of the high abnormality contribution degree C as the analysis result. In addition thereto or in place thereof, the cause analyzing portion 36 may compare the abnormality contribution degree C with a predetermined threshold value Co and may output only the component of which the abnormality contribution degree C is equal to or greater than the threshold value Co as the analysis result.

Meanwhile, in a case where there is no component of which the ratio p is a value equal to or greater than the predetermined threshold value ro (No in Step S2), the cause analyzing portion 36 outputs that the cause analysis cannot be performed in the form (cause is not clear), as the analysis result (Step S6). In this case, the cause is particularized through a different analysis technique (for example, analysis based on the experience or the like of the manager).

As in the present example, in addition to the running state of the component, when a component which has become the cause of abnormality is particularized by adding analysis data in the past or expectation of easiness of failure, the analysis accuracy can be further enhanced. The cause analyzing portion 36 may use the cause analysis result of the above-described example, in the next analysis and thereafter. For example, the contribution coefficient F may be corrected based on the cause analysis result.

In the example described above, description has been given regarding a form in which the cause analysis is performed based on the abnormality contribution degree C using the contribution coefficient F. However, the form is not limited thereto, and various types of analysis forms can be employed. For example, in a case where there are a plurality of components of which the running index Vr is equal to or greater than the reference value Vb, the cause analysis may be performed based on the priority rank set in advance in the plurality of components.

In addition, in the example described above, description has been given regarding a form in which the cause analysis is performed by using the ratio p. However, the form is not limited thereto, and various types of analysis forms can be employed. For example, the cause analysis may be performed by using the alert display stage color-coded in L1 as illustrated in Fig. 4. For example, the abnormality contribution degree C may be computed by applying the numerical value in accordance with the alert stage and multiplying the numerical value by the contribution coefficient F.

Moreover, in place of or in addition to the analysis forms, the cause analyzing portion 36 may perform general analysis based on not only the running state of the component but also the history of the usage form (usage course and the like) of the massage machine 1, the usage area (country, region, climate), the atmospheric pressure, the temperature, the humidity, the usage frequency, the gender of the main user, the age, and the like. Such analysis can be performed based on so-called known big data analysis. In this case, the usage area may be detected by the position detecting portion 27, the cause analyzing portion 36 may acquire climate information of the region such as the average temperature based on the detected position, and the information may be added to the cause analysis.

As the analysis result of such cause analysis, the usage history and the like of the massage machine 1 may be accumulated and stored in the server storage portion 34 of the server apparatus 32. Such information can be utilized for improving the massage machine 1 or developing a new model.

Hereinbefore, the embodiment of the present invention has been described. However, the present invention is not limited to the embodiment described above and various modifications, changes, and corrections can be made without departing from the scope of the gist.

For example, in the embodiment described above, description has been given regarding a form in which the running information is transmitted when the massage machine 1 transmits abnormality information to the server apparatus 32. However, the form is not limited thereto. For example, the running information of the massage machine 1 may be transmitted to the server apparatus 32 via the communication network 31 for each usage timing of the massage machine 1 or periodically (for example, weekly) and may be accumulated in the server storage portion 34. In a case where abnormality information is transmitted from the massage machine 1, the server control unit 35 of the server apparatus 32 may read out the running information of the component related to the abnormality information from the server storage portion 34, and the abnormality information and the running information of the component related to the abnormality information may be transmitted to the computer 33 for management. In other words, in place of the control unit 21, the server control unit 35 of the server apparatus 32 may generate the list L1, L2, or L3 illustrated in Figs. 4 and 5.

In addition, the embodiment described above has shown an example of the server apparatus 32 or the computer 33 for management as the predetermined computer apparatus with which the massage machine 1 communicates. However, the embodiment is not limited thereto. A computer apparatus can be applied as long as the computer apparatus can be connected to the communication network 31. For example, the information of the massage machine 1 may be transmitted to a computer such as a personal computer and a portable terminal of the user. In addition, in a case where the purchaser or the renter of the massage machine 1 is different from the user, the information of the massage machine may be transmitted to a computer such as a personal computer and a portable terminal of the purchaser or the renter of the massage machine 1. For example, in a case where a child purchases the massage machine 1 for a parent and gives the massage machine 1 to the parent as a present, the information of the massage machine may be transmitted to the child who is the purchaser of the massage machine 1.

In this case, the control unit 21 of the massage machine 1 may generate information regarding the using circumstances (usage date and time, usage course, and the like) of the massage machine main body 5 by the user, based on the running state of the predetermined components. The control unit 21 may transmit the information regarding the using circumstances to a computer of the purchaser. Such using circumstances may be transmitted to the server apparatus 32 or the computer 33 for management. Accordingly, a purchaser or a renter at a place separated from the user can acquire the using circumstances of the massage machine 1 (massage machine main body 5) of the user through the communication network 31. Therefore, the purchaser or the renter can check the condition of the user through the using circumstances.

In addition, the massage machine 1 may be configured not to include the communication portion 28. In this case, for example, the abnormality outputting portion 24 may cause the display portion provided in the massage machine main body 5, such as the display portion of the remote controller 20 to display the abnormality information and the running information. The display portion displaying the information may be configured to be a monitor, may be configured to be a plurality of lamps provided in the massage machine main body 5, or may be configured such that the lamps differently flash in accordance with the component related to the abnormality information and the abnormality information. In addition, in a case where the contents output from the abnormality outputting portion 24 are stored in the storage portion 26 and an external device (diagnosis device or the like) which belongs to the manager or the like is connected, each piece of the information may be configured to be output to the external device.

In addition, in the embodiment described above, description has been given regarding a configuration in which the cause analyzing portion 36 is provided in the server apparatus 32. However, the control unit 21 of the massage machine 1 or a control unit (not illustrated) of the computer 33 for management may function as the cause analyzing portion 36.

The control unit 21 or the server control unit 35 may generate a course corresponding to the user based on the running states of the plurality of predetermined components. For example, the control unit 21 or the server control unit 35 may analyze the running state of the component related to an operation of the course of which the usage frequency of the user is high and may presume the shape of the body of the user or the size of each site such that the course is optimized or a course more favorable for the user is generated. Accordingly, the user can be provided with a more favorable course based on the running state of the component, and a massage effect on the user can be enhanced.

In addition, in the embodiment described above, description has been given regarding the chair-type massage machine. However, the type of the massage machine and the configurations of the treatment portion 6 and the like are not limited. The present invention can be applied to various types of massage machines.

### INDUSTRIAL APPLICABILITY

The present invention is useful for promptly particularizing a cause of abnormality or a component required to be repaired (replaced/adjusted) in a case where abnormality occurs in a massage machine or a diagnostic system of the massage machine.

### LIST OF REFERENCE NUMERALS

1 MASSAGE MACHINE
5 MASSAGE MACHINE MAIN BODY
6 TREATMENT PORTION
21 CONTROL UNIT
23 ABNORMALITY DETERMINING PORTION
24 ABNORMALITY OUTPUTTING PORTION
25 RUNNING STATE DETECTING PORTION
26 STORAGE PORTION
27 POSITION DETECTING PORTION
28 COMMUNICATION PORTION
31 COMMUNICATION NETWORK
32 SERVER APPARATUS (PREDETERMINED COMPUTER APPARATUS)
33 COMPUTER FOR MANAGEMENT (PREDETERMINED COMPUTER APPARATUS)

## Claims

1. A massage machine comprising:
a massage machine main body that has a treatment portion performing treatment with respect to a user;
a running state detecting portion that detects a running state of each of a plurality of predetermined components configuring the massage machine main body;
a storage portion that stores the running state; and
a control unit that controls an operation of the massage machine main body,
wherein the control unit includes an abnormality determining portion which determines the presence and absence of abnormality related to the massage machine main body, and an abnormality outputting portion which outputs information related to the abnormality and information related to the running state in a case where the abnormality determining portion determines that abnormality is present.

2. The massage machine according to Claim 1,
wherein the storage portion stores a plurality of abnormality states, causes the running state of a component related to each of the abnormality states in the plurality of predetermined components to be associated with the abnormality state, and stores the associated result,
wherein the abnormality determining portion determines that the abnormality is present in a case where the state of the massage machine main body corresponds to any of the plurality of abnormality states, and
wherein the abnormality outputting portion causes the corresponding abnormality state to be associated with the information related to the running state of the component related to the abnormality state and outputs the associated result in a case where the abnormality determining portion determines that abnormality is present.

3. The massage machine according to Claim 1 or 2,
wherein each of the running states of the plurality of predetermined components is configured to be a running index indicated by a numerical value,
wherein the storage portion causes a reference value set in advance regarding the running index to be associated with the running index and stores the associated result, and
wherein the abnormality outputting portion outputs a result as the information related to the running state such that a component having the value of the running index which has become equal to or greater than the corresponding reference value to be able to be highlighted.

4. The massage machine according to Claim 3,
wherein the running index is configured to be a running time and/or the number of times of running for each of the predetermined components.

5. The massage machine according to any one of Claims 1 to 4, further comprising:
a communication portion that is able to transmit information output from the abnormality outputting portion, to a predetermined computer apparatus via a communication network.

6. The massage machine according to Claim 5, further comprising:
a position detecting portion that detects an installation position of the massage machine main body,
wherein the communication portion transmits the information output from the abnormality outputting portion and information of the installation position of the massage machine main body to the predetermined computer apparatus.

7. The massage machine according to Claim 5 or 6,
wherein the control unit generates information regarding using circumstances of the massage machine main body based on the running states of the plurality of predetermined components and transmits the information regarding the using circumstances to a predetermined computer.

8. The massage machine according to any one of Claims 1 to 7,
wherein the storage portion stores the plurality of abnormality states, causes the running state of the component related to each of the abnormality states in the plurality of predetermined components to be associated with the abnormality state, and stores the associated result,
wherein the abnormality determining portion determines that the abnormality is present in a case where the state of the massage machine main body corresponds to any of the plurality of abnormality states, and
wherein the control unit includes a cause analyzing portion which analyzes a cause in a case where the abnormality determining portion determines that abnormality is present and there are a plurality of components related to the corresponding abnormality state, based on the running state of the plurality of components.

9. The massage machine according to any one of Claims 1 to 8,
wherein the control unit generates a course corresponding to the user based on the running states of the plurality of predetermined components.

10. A diagnostic system of a massage machine including a massage machine and a predetermined computer apparatus which is configured to be able to communicate with the massage machine via a communication network, the massage machine comprising:
a massage machine main body that has a treatment portion performing treatment with respect to a user;
a running state detecting portion that detects running states of a plurality of predetermined components configuring the massage machine main body;
a control unit that controls an operation of the massage machine main body; and
a communication portion,
wherein the control unit includes an abnormality determining portion which determines the presence and absence of abnormality related to the massage machine main body, and an abnormality outputting portion which outputs information related to the abnormality in a case where the abnormality determining portion determines that abnormality is present,
wherein the communication portion is configured to transmit information related to the running state of the predetermined component to the predetermined computer apparatus via the communication network and to transmit information output from the abnormality outputting portion, to the predetermined computer apparatus via the communication network, and
wherein the predetermined computer apparatus abstracts a component related to the abnormality in the plurality of predetermined components based on the information related to the abnormality and outputs the abstracted result.
